# EUROPÄISCHE PATENTSCHRIFT

(11) **EP 1 321 681 B1**
(45) Veröffentlichungstag und Bekanntmachung des Hinweises auf die Patenterteilung: **22.06.2005**
(21) Anmeldenummer: 01130305.4
(22) Anmeldetag: 19.12.2001
(51) Int. Cl.: F16B 13/08, F16B 21/02

(54) **Vorrichtung zum Halten eines Gegenstandes an einem Objekt sowie Verfahren zu dessen Befestigung an dem Objekt**
Device for fixing an article to an object and method for fixing it to an object
Dispositif pour fixer une article à un objet et methode de fixation à un objet

(43) Veröffentlichungstag der Anmeldung: 25.06.2003
(73) Patentinhaber: Rüdel, Werner, 84307 Eggenfelden (DE)
(72) Erfinder: Rüdel, Werner, 84307 Eggenfelden (DE)
(74) Vertreter: Müller, Gerald Christian

(56) Entgegenhaltungen:
- WO-A-94/07040
- DE-A- 3 330 279
- DE-A- 4 039 575
- FR-A- 2 790 046

## Beschreibung

### I. Anwendungsgebiet

Die Erfindung betrifft eine Vorrichtung zum Haltern eines Gegenstandes an einem Objekt, insbesondere einer Wand, sowie ein Verfahren zu dessen Befestigung an dem Objekt. (DE 40 39 575 A).

### II. Technischer Hintergrund

Häufig sieht man sich im Alttag mit dem Problem konfrontiert, einen Gegenstand an einem Objekt, insbesondere einer Wand, zu haltern. Um eine dauerhafte und stabile Verbindung zu erreichen, sind üblicherweise aufwendige Bewegungsabläufe erforderlich. Bisher bekannte Halterungen in Form einer Verbindung von Dübel und Schraube beruhen auf dem mit Einschrauben der Schraube im Dübelloch allmählich verlaufenden Aufspreizen des Dübelbauches. Dieses durch das axiale Eindringen des Schraubenkörpers hervorgerufene Aufspreizen bewirkt ein Verklemmen des Systems Schraube/Dübel mit dem umgebenden Material. Hieraus ergibt sich die Fixierung des Systems in dem Bohrloch.

Der Nachteil einer derartigen Vorrichtung besteht darin, dass bis zum Erreichen der vollständigen Aufspreizung des Dübelbauches und somit der wunschgemäß stabilen Halterung eine Vielzahl von Umdrehungen der Schraube erforderlich ist. Wird darüber hinaus verlangt, dass der aus dem Dübel eingangsseitig überstehende Schraubenteil eine festgelegte Länge aufweist, so muss zum Einstellen der selbigen erneut eine Vielzahl von Umdrehungen ausgeführt werden, bis durch Eindringen des Schraubengewindes in den Dübel der gewünschte Überstand erreicht ist.

Als Beispiel kann hier eine Stockschraube zum Befestigen von Leitungen, Rohren, insbesondere Heizungsrohren, und ähnlichem an Wandungen genannt werden, welche an einem Ende mit einem Gewinde versehen ist und am anderen eine Schelle aufweist, in welcher später das zu befestigende Rohr platziert wird. Die übliche Vorgehensweise beginnt mit dem Bohren einer Bohrung in der Wand/Decke, an welcher das Rohr befestigt werden soll. Daraufhin wird der Dübel in die Bohrung eingebracht und die Stockschraube bis zur gewünschten Tiefe eingeschraubt, wodurch der Abstand des Rohres zur Wand/Decke definiert wird. Dieser Vorgang ist durch die oben angesprochene benötigte Vielzahl von Umdrehungen der Stockschraube zeitaufwendig. Dieser Nachteil wird dadurch potenziert, dass zum Befestigen eines Rohres naturgemäß eine Vielzahl von Rohrschellen zu setzen ist.

### III. Darstellung der Erfindung

### a) Technische Aufgabe

Es ist daher die Aufgabe der vorliegenden Erfindung, eine Vorrichtung zum Haltern eines Gegenstandes an einem Objekt, sowie ein Verfahren zu dessen Befestigung an dem Objekt zu schaffen, die bzw. welches es auf einfache, unkomplizierte und schnelle Art und Weise gestattet, eine halternde Verbindung zwischen dem Gegenstand und dem Objekt, insbesondere einer Wand, zu erreichen.

### b) Lösung der Aufgabe

Diese Aufgabe wird durch die in den unabhängigen Ansprüchen 1, 3, 12 und 26 angegebenen Merkmale gelöst. Weitere Ausgestaltungen der Erfindung ergeben sich aus den Unteransprüchen.

Der Erfolg der Erfindung beruht auf dem vollständigen Aufspreizen eines dübelartigen Befestigungselementes durch weniger als eine volle Umdrehung einer Befestigungsstange. Vollständig in diesem Sinne bedeutet, dass durch Drehen der Befestigungsstange um weniger als eine volle Umdrehung bereits diejenige Aufspreizung des Befestigungselementes erreicht wird, die erforderlich ist, um die gewünschte sichere Verklemmung des Befestigungselementes in der Bohrung zu erreichen. Hierzu weist die Befestigungsstange in wenigstens einem Abschnitt einen Querschnitt auf, der in einer ersten Radialrichtung breiter ist als in einer zweiten Radialrichtung. Mit anderen Worten weist die Befestigungsstange einen unrunden Querschnitt auf. Durch eine vorzugsweise entsprechende Gestaltung des Querschnitts des Axialhohlraums des Befestigungselementes wird erreicht, dass die Befestigungsstange zunächst mit geringem Kraftaufwand in den Axialhohlraum des Befestigungselementes eingebracht werden kann, wobei durch diesen Vorgang, im Gegensatz zum bekannten Verfahren, noch keine Aufspreizung des Befestigungselementes erfolgt. Daraufhin kann, nach Einstellen der gewünschten Eindringtiefe, mittels Verdrehen der Befestigungsstange um weniger als eine volle Umdrehung der Elementkörper des Befestigungselementes vollständig aufgeweitet werden, wodurch die erwünschte Klemmwirkung erreicht wird.

Der Drehwinkel für maximales Aufweiten und somit maximale Klemmwirkung wird durch die Geometrie der Querschnitte der entsprechenden, Klemmwirkung hervorrufenden Abschnitte der Befestigungsstange einerseits und des Befestigungselementes andererseits bestimmt. Maximales Aufweiten wird erreicht, wenn die Befestigungsstange in einer Drehstellung ist, in welcher die maximale Breite des entsprechenden Abschnittes der Stange der minimalen Breite des Abschnittes des Elementkörpers entgegensteht. Hierbei weisen die beiden Querschnitte lediglich vorzugsweise die gleiche Geometrie auf. Diesbezüglich gleiche Geometrie ist jedoch kein zwingendes Merkmal der vorliegenden Erfindung. Sollten beispielsweise die beiden Radialrichtungen, in denen der Breitenunterschied der betreffenden Abschnittsquerschnitte maximal ist, zueinander senkrecht stehen, wie z. B. für den Fall eines elliptischen Querschnitts, so beträgt der Drehwinkel für maximale Aufweitung ebenfalls 90°.

Denkbar sind jedoch auch Fälle, in denen ein maximales Aufweiten schon nach weniger als einer Vierteldrehung erreicht wird, wie z.B. bei elliptischem Querschnitt des Stangenabschnittes und Sechseckquerschnitt des Elementkörperabschnittes nach 30°.

Eventuell kann die Drehstellung mit maximaler Aufweitung ein labiles Gleichgewicht darstellen, in welchem die Klemmwirkung auftretenden Rückstellkräften entgegenwirkt. Dies ist zum Beispiel der Fall für quadratische Querschnitte von Befestigungsstangenabschnitt und Elementkörperabschnitt, bei welchen maximale Aufweitung bei Verdrehung um 45° erreicht wird. Um eine Stabilisierung einer derartigen Situation zu erreichen, kann die die erfindungsgemäß vollständige Aufweitung hervorrufende Drehstellung der Befestigungsstange leicht von der Drehstellung maximaler Aufweitung und somit maximaler Klemmung abweichen. Bei Verwendung von z. B. jeweils rechteckigen, jedoch nicht quadratischen, Querschnitten, wird maximale Aufweitung erfolgen, wenn die Diagonale des Querschnitts des Befestigungsstangenabschnittes der längeren Rechteckseite des Querschnittes des Elementkörperabschnittes entgegensteht bzw. an dieser anliegt. Eine ideale, da ein stabiles Gleichgewicht darstellende, Situation ist jedoch gegeben , wenn die kürzere Rechteckseite des Querschnittes des Befestigungsstangenabschnittes der längeren Rechteckseite des Querschnittes des Elementkörperabschnittes entgegensteht bzw. an dieser anliegt, was einer Verdrehung von 90° entsprechen würde. Durch geeignete Wahl der Geometrieparameter des Querschnitts kann auch für diese Situation eine ausreichende Aufweitung bzw. Klemmwirkung erzielt werden. Für den Fall eines quadratischen Querschnitts des Elementkörperabschnittes kann eine Stabilisierung z. B. durch Abflachen der Ecken eines ursprünglich quadratischen Querschnittes des Befestigungsstangenabschnittes geschehen, wodurch eine Verdrehung um 45° ausreichen würde, um eine stabile Klemmwirkung zu erreichen.

Über den die Klemmwirkung erzeugenden Abschnitt der Befestigungsstange auf in der ersten Radialrichtung, also in derjenigen, in welcher der Querschnitt des Abschnittes der Befestigungsstange gegenüber einer zweiten Radialrichtung breiter ist, gegenüberliegenden Seiten des Querschnittes der Befestigungsstange können Widerhakenmittel angebracht werden. Diese schneiden dann beim Aufweiten des Elementkörpers in dessen Material ein und verstärken so in formschlüssiger Weise den Halt zwischen der Befestigungsstange und dem Elementkörper. Dadurch wird die Halterung des Gegenstandes an dem betreffenden Objekt gegenüber im Hinblick auf die Befestigungsstange) axialen Zugkräften über die kraftschlüssige Klemmwirkung hinaus zusätzlich gesichert. Gleichzeitig kann durch die Widerhakenelemente auch die Stabilität der aufweitenden und somit verklemmenden Drehstellung alternativ oder zusätzlich gesteigert werden.

Die betreffenden Widerhakenmittel können z. B. von einem Gewinde gebildet werden. In diesem Fall könnte der Querschnitt des die Klemmwirkung erzeugenden Abschnittes der Befestigungsstange eine geometrische Form besitzen, die durch das auf zwei gegenüberliegenden Seiten durchgeführte Abfräsen einer Gewindestange entsteht, also eine Rechteckform, welcher auf beiden kürzeren Seiten identische Kreissegmente mit Gewindegängen aufgesetzt werden.

Weiterhin kann die Befestigungsstange Markierungen aufweisen. Diese könnten z. B. anzeigen, in welchem axialen Einschubbereich die die Klemmwirkung erzeugenden Abschnitte der Befestigungsstange einerseits und des Elementkörpers andererseits zusammenwirken können, so dass ein erfindungsgemäßer Gebrauch der Vorrichtung möglich ist. Eine auf der Befestigungsstange angebrachte Skala kann benutzt werden, um den der jeweiligen Einschubtiefe der Befestigungsstange in den Elementkörper entsprechenden Abstand des zu halternden Gegenstandes von dem Objekt anzugeben.

Vorzugsweise erstreckt sich der die Klemmwirkung erzielende Abschnitt der Befestigungsstange über die gesamte Länge des Elementkörpers des Befestigungselementes, so dass eine sogenannte parallele Klemmung bewirkt wird. Daraus ergibt sich eine größere Flexibilität hinsichtlich des gewünschten Abstandes des Gegenstandes von dem Objekt, der sich aus der Länge des aus der Wand ragenden Befestigungsstangenabschnittes ergibt. Weist der erfindungsgemäß ausgebildete Abschnitt der Befestigungsstange eine axiale Länge auf, die größer als die axiale Länge des Befestigungselementes ist, so wird sichergestellt, dass selbst nach Einstellung des Sollabstandes zwischen Gegenstand und Objekt das Befestigungselement bei Verdrehung der Befestigungsstange auf seiner gesamten Länge aufgeweitet wird. Dies ist bei nicht homogenen Objekten, beispielsweise einer Hohlräume bzw. -kammern aufweisenden Wand, von erheblichem Vorteil, da bei der parallelen Klemmung die das Mauerwerk beaufschlagenden Klemmkräfte nicht punktuell, sondern über die gesamte axiale Länge des Befestigungselements verteilt wirken. Dies verhindert, dass Hohlkammern in Mauersteinen ausbrechen und der Halt des Befestigungselements im Mauerwerk dadurch beeinträchtigt wird.

Um ein Aufweiten des Elementkörpers zu erleichtern, kann dieser aus zwei Körperhälften bestehen, die beim Aufweiten voneinander getrennt und voneinander beabstandet werden. Die Trennebene der beiden Hälften kann beispielsweise durch eine beim Aufweiten brechende Sollbruchstelle ausgebildet sein. Mögliche Realisierungen dieser Sollbruchstelle können eine Perforierung oder Verdünnung des Materials entlang der Bruchstelle sein.

Eine alternative Verbindung der beiden Elementkörperhälften kann in einem oder mehreren elastischen Halteringen bestehen, die um die Außenumfänge der Elementkörperhälften verlaufen und beim Aufweiten elastisch nachgeben. Bei Bedarf können die Halteringe zumindest teilweise in Ringnuten angeordnet werden, die in den Außenumfangsflächen der Elementkörperhälften vorgesehen sind.

Das Einbringen des Befestigungselementes in die vorgesehene Bohrung kann erleichtert werden, indem der Axialhohlraum an dem dem zu halternden Gegenstand abgewandten Ende des Befestigungselementes, d. h. an dem in Einführrichtung vorderen Ende, mittels einer Abdeckung verschlossen ist. In diesem Fall kann die Befestigungsstange benutzt werden, um, nach dem Einführen in das Befestigungselement, das selbige in die Bohrung einzubringen. Hierbei kann das Befestigungselement sich schon vormontiert auf der Befestigungsstange befinden, oder von dem Benutzer der erfindungsgemäßen Vorrichtung erst eigens zu diesem Zweck auf die Befestigungsstange gesteckt werden. Soll die Befestigungsstange tiefer als die axiale Länge des Axialhohlraumes des Befestigungselementes in die Bohrung eingebracht werden, so kann die den Axialhohlraum an dem in Einführrichtung vorderen Ende verschließende Abdeckung von der Befestigungsstange durchstoßen werden. Dies kann z. B. mit einem kurzen Schlag von Hand oder mit Hilfe eines Zusatzwerkzeugs auf das andere Ende der Befestigungsstange geschehen. Danach kann dann die Befestigungsstange, von der axialen Länge des Befestigungselementes unabhängig, axial verschoben werden, soweit es die Tiefe der Bohrung zulässt. Um ein derartiges Durchbrechen zu ermöglichen, kann die Abdeckung beispielsweise durch Materialausdünnung entsprechend geschwächt werden.

Das Befestigungselement kann mit einem Abschlussbund ausgebildet sein, um ein im wesentlichen bündiges Abschließen des Befestigungselementes mit dem betreffenden Objekt zu erreichen. Durch die zur Verklemmung benötigten Verdrehungswinkel werden bestimmte Richtungen im Raum senkrecht zur Achse der Befestigungsstange hinsichtlich der ursprünglichen Ausrichtung, d. h. hinsichtlich der Ausrichtung vor dem Verdrehen der Befestigungsstange, des Befestigungselementes festgelegt. Dies kann von Bedeutung sein, wenn der zu halternde Gegenstand räumlich ausgerichtet sein muss. Beispielsweise müssen fest an der jeweiligen Befestigungsstange fixierte Schellen zur Befestigung von Rohren zueinander in Richtung der Rohre ausgerichtet sein. In einem derartigen Fall kann der oben erwähnte Abschlussbund benutzt werden, um Informationen über die Halterung des Gegenstandes an dem Objekt wiederzugeben. Es könnte z. B. ein rautenförmiger Abschlussbund benutzt werden, wobei die Spitze der Raute an dem jeweiligen Befestigungselement eine Ausrichtung mehrerer Befestigungselemente zueinander ermöglichen würde.

Damit eine erfindungsgemäße Benutzung erfolgen kann, darf sich das Befestigungselement beim klemmwirksamen Verdrehungsvorgang der Befestigungsstange nicht in der Bohrung mitbewegen. Der sofort greifende Klemmmechanismus wirkt einem derartigen Durchdrehen entgegen. Darüber hinaus können am Außenumfang des Elementkörpers des Befestigungselementes Haltemittel angebracht werden, die das Befestigungselement widerhakenartig in der Bohrung halten und ein Durchdrehen weiter erschweren. Diese Haltemittel können beispielsweise aus scharfkantigen Halteringen gebildet werden, die das Befestigungselement vollständig umlaufen. Eine zusätzliche Verdrehsicherung kann geschaffen werden, indem einer oder mehrere der Halteringe einen größeren Durchmesser als die übrigen Halteringe aufweist. Denkbar sind auch Haltemittel in Form von vom Außenumfang des Elementkörpers abstehenden und gegenüber dessen Längsachse geneigten Halteflügeln.

Für den Fall, dass beim Einsatz der Erfindung ein vollständiges Abdecken der Bohrung erforderlich ist, um einen Austritt der darin befindlichen Verunreinigungen zu verhindern, wie z. B. in Reinsträumen, kann eine auf die Befestigungsstange aufschiebbare Abdeckkappe vorhanden sein. Diese kann vormontiert sein, oder nachträglich vor Einbringen der Befestigungsstange in das Befestigungselement auf die selbige aufgeschoben werden. Nach dem Verdrehen der Befestigungsstange und dem damit erfolgten Verklemmen der erfindungsgemäßen Vorrichtung kann die Abdeckkappe bündig über das Bohrloch gebracht werden. Durch Verwendung von thermoplastischem Material kann dann durch Erhitzen der Abdeckkappe, beispielsweise mit Hilfe eines Heißluftgebläses, ein dichter Verschluß der Bohrung geschaffen werden.

Die vorliegende Erfindung ist in einer Vielzahl von Anwendungsfällen einsetzbar. Beispielhaft seien folgende Anwendungen genannt:
- Befestigen von Gegenständen in Form von Rohren, Leitungen und ähnlichem an Objekten in Form von Wandungen wie Böden, senkrechten oder schrägen Wänden und Decken;
- Befestigen von aufzuhängenden Gegenständen in Form von Lampen und ähnlichem an Objekten in Form von Decken;
- Befestigen von Gegenständen in Form von Waschbecken und anderen sanitären Einrichtungen an Objekten in Form von Wänden;
- Befestigen von Gegenständen in Form von Zwischen- oder Doppelböden bzw. deren Plattenelementen an Objekten in Form von Haupt- oder Unterböden;
- Befestigen von Gegenständen in Form von Treppenstufen an Objekten in Form von Treppenunterböden; dabei dient die erfindungsgemäße Vorrichtung ähnlich wie bei Doppelböden zur Nivellierung der Treppenstufen;
- Befestigen von Gegenständen in Form von Verkehrszeichen an Objekten in Form von Sockeln für mobile Verkehrszeichen oder in Form von Halterungseinrichtungen für stationäre Verkehrszeichen; dabei kann die Befestigungsstange von der an einem Ende abgeflachten Verkehrszeichenstange und das Befestigungselement von einer das abgeflachte Ende aufnehmenden, beispielsweise aus Blech bestehenden Hülse gebildet werden;
- Befestigen von Gegenständen in Form von Türzargen an Objekten in Form von Türlaibungen; dabei fungiert die erfindungsgemäße Vorrichtung als Abstandhalter zwischen Zarge und Laibung;
- Befestigen von Gegenständen in Form von Unterkonstruktionen, beispielsweise Latten oder Profilleisten, an Objekten in Form von unebenen Wänden; dabei dient die erfindungsgemäße Vorrichtung insbesondere zur Nivellierung der Unebenheiten.

### c) Ausführungsbeispiele

Die Erfindung wird nachstehend anhand bevorzugter Ausführungsbeispiele und mit Bezug auf die Zeichnungen näher erläutert. Es zeigen:
- Fig. 1:: eine Seitenansicht der erfindungsgemäßen Vorrichtung in nicht halterndem Zustand;
- Fig. 2:: die der Blickrichtung der Fig. 1 entsprechende Seitenansicht der erfindungsgemäßen Vorrichtung nach Drehung der Befestigungsstange 1 um 90°, also im halternden Zustand;
- Fig. 3:: eine Seitenansicht des Befestigungselementes 2 mit Blickrichtung parallel zur Trennebene 6 der beiden Elementkörperhälften 4, 5;
- Fig. 4:: eine Seitenansicht des Befestigungselementes 2 mit Blickrichtung senkrecht zur Trennebene 6 der beiden Elementkörperhälften 4, 5;
- Fig. 5:: einen Axialschnitt des Befestigungselementes 2 senkrecht zur Trennebene 6 der beiden Elementkörperhälften 4, 5;
- Fig. 6:: einen Axialschnitt des Befestigungselementes 2 entlang der Trennebene 6 der beiden Elementkörperhälften 4, 5;
- Fig. 7:: eine Aufsicht auf das Befestigungselement 2 in der in Fig. 4 gezeigten Richtung A-A';
- Fig. 8:: eine Seitenansicht der Befestigungsstange 1 in Richtung der Radialrichtung RS1;
- Fig. 9:: eine Seitenansicht der Befestigungsstange 1 in Richtung der Radialrichtung RS2;
- Fig. 10:: einen Querschnitt der Befestigungsstange 1;
- Fig. 11:: eine Seitenansicht der erfindungsgemäßen Vorrichtung im nicht halternden Zustand mit Rohrschelle;
- Fig. 12:: die der Blickrichtung der Fig. 11 entsprechende Seitenansicht der erfindungsgemäßen Vorrichtung nach Drehung der Befestigungsstange 1 um 90°, also im halternden Zustand;
- Fig. 13:: eine Seitenansicht der erfindungsgemäßen Vorrichtung im nicht halternden Zustand mit Abstandhalterplatte;
- Fig. 14:: die der Blickrichtung der Fig. 13 entsprechende Seitenansicht der erfindungsgemäßen Vorrichtung nach Drehung der Befestigungsstange 1 um 90°, also im halternden Zustand;
- Fig. 15:: eine Aufsicht auf die Vorrichtung gemäß Fig. 13 in der in Fig. 13 angegebenen Blickrichtung B-B';
- Fig. 16:: eine Seitenansicht der erfindungsgemäßen Vorrichtung im nicht halternden Zustand mit Haken;
- Fig. 17:: die der Blickrichtung der Fig. 16 entsprechende Seitenansicht der erfindungsgemäßen Vorrichtung nach Drehen der Befestigungsstange 1 um 90°, also im halterndem Zustand;
- Fig. 18:: eine Seitenansicht der erfindungsgemäßen Vorrichtung im nicht halternden Zustand mit Öse;
- Fig. 19:: die der Blickrichtung der Fig. 18 entsprechende Seitenansicht der erfindungsgemäßen Vorrichtung nach Drehung der Befestigungsstange 1 um 90°, also im halternden Zustand;
- Fig. 20:: eine Seitenansicht der Befestigungsstange 1 mit einem Gewindeabschnitt 36 und einer Ansicht auf die Befestigungsstange von unten;
- Fig. 21:: eine Seitenansicht der in Fig. 20 gezeigten Befestigungsstange von links mit einer Mutter;
- Fig. 22:: eine Seitenansicht der erfindungsgemäßen Vorrichtung inklusive Abdeckkappe 12 mit Öse;
- Fig. 23:: die in Fig. 22 gezeigte Abdeckkappe 12 von oben; und
- Fig. 24:: einen Schnitt durch die in Fig. 23 gezeigte Abdeckkappe 12 welcher der Schnittdarstellung in Fig. 22 entspricht.

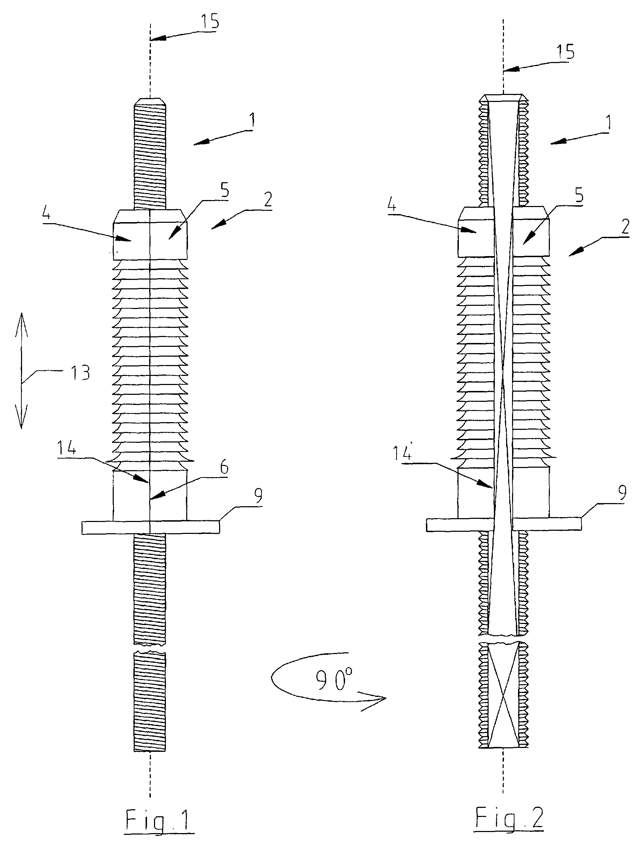

Bezugnehmend auf Fig. 1 wird dort eine bevorzugte Ausführungsart der Vorrichtung in Seitenansicht gezeigt. Das Befestigungselement 2, hier dübelartig ausgebildet und im weiteren als Dübel bezeichnet, ist auf die Befestigungsstange 1, hier in Form einer abgefrästen Gewindestange, aufgebracht. Dübel 2 und Befestigungsstange 1 weisen in dieser Ausführung über ihre gesamte Axiallänge Querschnitte auf, die aneinander angepasst sind und erfindungsgemäß je eine erste Radialrichtung besitzen, in der der Querschnitt breiter ist als in einer zweiten Radialrichtung, wobei diese Radialrichtungen in dieser Ausführung zueinander senkrecht stehen. Hierauf wird weiter unten noch detailliert eingegangen.

Die Befestigungsstange 1 befindet sich in Fig. 1 in einer solchen Drehstellung in dem Dübel 2, dass dieser in dieser Stellung nicht aufgeweitet ist, und demnach keine Klemmwirkung in der nicht gezeigten Bohrung zur Aufnahme des Dübels 2 erzeugt wird. Somit kann die Befestigungsstange 1 beliebig bzw. stufenlos in der durch den Pfeil 13 gekennzeichneten Axialrichtung in dem Dübel 2 positioniert werden. Die beiden Körperhälften 4, 5 des rotationssymmetrischen Elementkörpers des Dübels 2 sind durch eine entlang der Trennebene 6 verlaufene Sollbruchstelle miteinander verbunden. Wird nun die Befestigungsstange 1 um 90° um ihre Achse 15 verdreht, wobei der Dübel 2 sich nicht mitbewegt, so wird die in Fig. 2 dargestellte Stellung erreicht. Der Dübel 2 wird aufgeweitet, und die beiden Körperhälften 4, 5 sind nach Bruch der Sollbruchstelle 14 voneinander beabstandet. Die Beabstandung der Körperhälften 4, 5 bewirkt eine Verklemmung derselben mit dem die Bohrung umgebenden Material. Im Folgenden wird nun genauer auf die bevorzugte Ausführung des Dübels 2 und der Befestigungsstange 1 eingegangen, bevor konkrete Anwendungsbeispiele gezeigt werden.

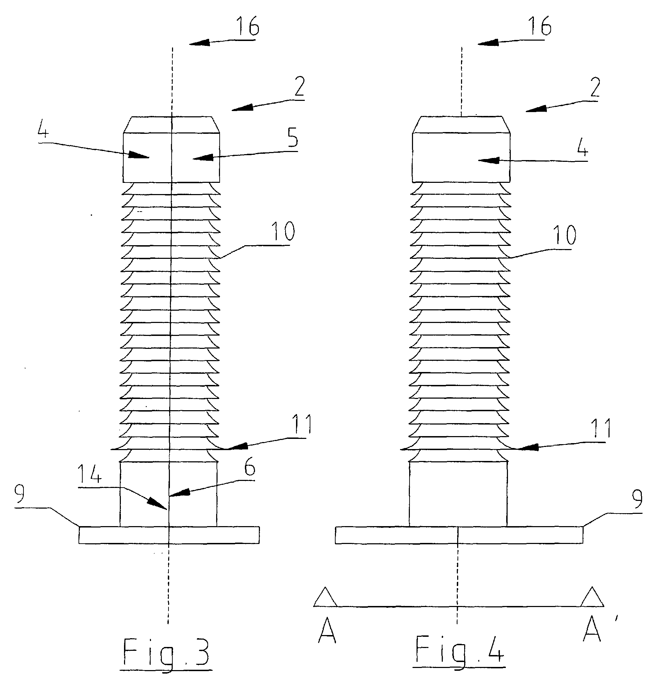

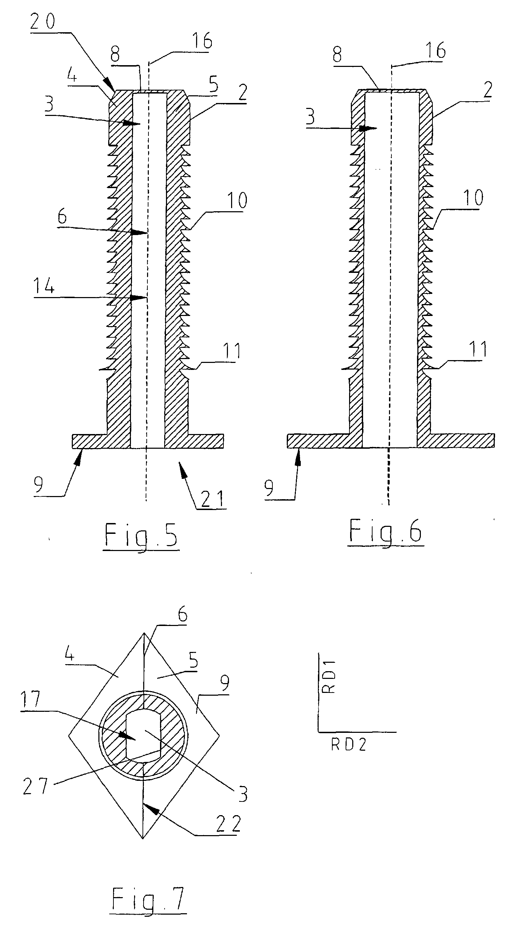

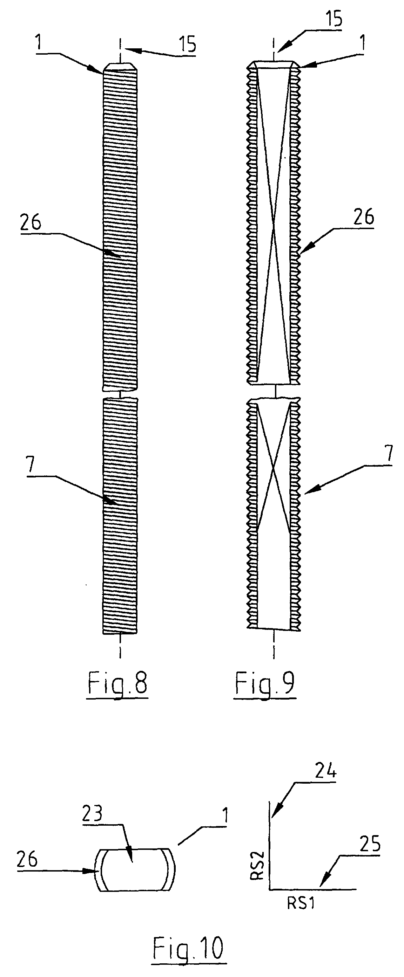

Fig. 3 zeigt den Dübel 2 in einer Seitenansicht, parallel zur Trennebene 6, und Fig. 4 zeigt den Dübel 2 in einer Seitenansicht, senkrecht zur Trennebene 6, also gegenüber Fig. 3 um 90° um die Dübelachse 16 gedreht. Die entsprechenden Schnitte durch den Dübel sind in Fig. 5 und Fig. 6 zu sehen. Fig. 7 zeigt eine Ansicht auf den Dübel 2 entsprechend der in Fig. 4 gezeigten Blickrichtung A-A'.

Der Axialhohlraum 3 des Dübels 2 weist über seine gesamte Länge den aus Fig. 7 ersichtlichen Querschnitt 17 auf, der im wesentlichen dem der abgefrästen Befestigungsstange 1 entspricht, also einem Kreis, von dem symmetrisch zur Mittelachse zwei gegenüberliegende Kreissegmente entfernt wurden. Hierdurch wird die erfindungsgemäße Ausbildung erreicht, in welcher der Querschnitt 17 des Axialhohlraumes 3 des Dübels 2 in einer ersten Radialrichtung RD1 breiter ist als in einer zweiten Radialrichtung RD2. Diese Richtungen sind hier so definiert, dass sie gleichzeitig die maximalen Breitenunterschiede des Querschnitts 17 darstellen und stehen in der hier gezeigten Ausführung aufeinander senkrecht.

Die beiden Körperhälften 4, 5 sind durch die entlang der Trennebene 6 verlaufende Sollbruchstelle 14 verbunden. Das in Fig. 5 obere Ende 20 des Dübels 2 wird vorzugsweise durch eine Abdeckung 8 verschlossen, welche entsprechend dünn ausgebildet ist, um ein Durchstoßen mit der Befestigungsstange 1 nach Einbringen des Dübels 2 in die nicht dargestellte Bohrung zur weiteren axialen Positionierung der Befestigungsstange 1 in dem Dübel 2 zu ermöglichen.

Die Vorderseite 21 bzw. das in den Fig. 5 und 6 untere Ende des Dübels 2 ist mit einem rautenförmigen Abschlussbund 9 ausgebildet, dessen längere Diagonale 22 in Richtung RD1 ausgerichtet ist, in welcher der Querschnitt 17 des Axialhohlraumes 3 seine maximale Breite besitzt. Diese Breite entspricht im wesentlichen dem Kreisdurchmesser der Befestigungsstange 1.

An der Außenseite des Dübels 2 sind integral in den Körperhälften 4,5 ausgebildete Halteringe 10 vorgesehen, die durch ihre widerhakenähnliche Form einerseits eine Mitbewegung des Dübels beim Verdrehen der Befestigungsstange verhindern und andererseits den Dübel gegen Herausziehen aus der Bohrung axial sichern. Ein Haltering 11 weist hierbei einen größeren Radius auf als die übrigen Halteringe 10, was diese Effekte weiter verstärkt.

Die Geometrie der Befestigungsstange 1 wird in Figuren 8, 9 und 10 beschrieben. Sie weist auf ihrer gesamten Länge den in Fig. 10 gezeigten Querschnitt 23 auf, welcher bei der gezeigten Ausführungsform im wesentlichen dem des dübelseitigen Axialhohlraumes 3 entspricht. Durch das Abfräsen wird die erfindungsgemäße Ausbildung geschaffen, dass der Querschnitt 23 der Stange 1 in einer ersten Radialrichtung RS1 breiter ist, als in einer zweiten Radialrichtung RS2. Hierbei stehen die Richtungen maximalen Breitenunterschiedes senkrecht aufeinander.

Das sich auf den in Radialrichtung RS1 gegenüberliegenden Seiten des Querschnitts 23 befindliche Gewinde 26 schneidet sich beim Verdrehen der Stange 1 in die in Radialrichtung RD2 gegenüberliegenden Innenseiten 27 des Dübels 2 und fungiert somit als Widerhaken 7 zur Sicherung der Befestigungsstange 1 in der Position maximaler Dübelaufweitung.

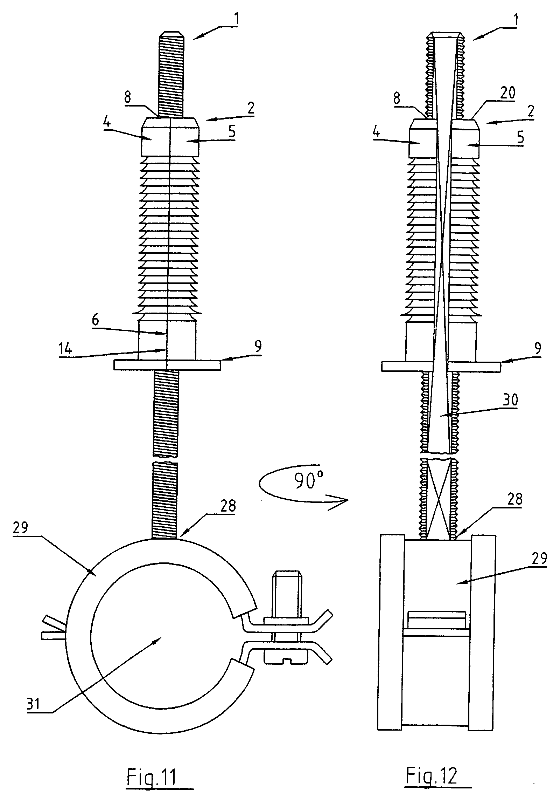

Fig. 11 und 12 zeigen die bevorzugte Ausführungsart in einem konkreten Anwendungsbeispiel. Hierbei dient die erfindungsgemäße Vorrichtung zur Befestigung von Rohren, Kabeln oder ähnlichem. Zu diesem Zweck ist das von dem Dübel 2 abgewandte Ende 28 der abgefrästen Befestigungsstange 1 als Schelle 29 ausgebildet, in welcher später der zu befestigende Gegenstand angebracht wird. Da die Orientierung der Schelle in diesem Zusammenhang von Bedeutung ist, wird sie in der hier beschriebenen Ausführung immer in der gleichen Ausrichtung hinsichtlich der Geometrie des Gewindestangenquerschnittes 23 an der Befestigungsstange 1 befestigt. In diesem Fall gibt dann die Orientierung des rautenförmigen Abschlussbundes 9, der aufgrund der Rautenform zwei Vorzugsrichtungen aufweist, an, in welcher Ausrichtung der Dübel 2 in die Bohrung eingebracht werden muss, damit die einzelnen Schellen zueinander ausgerichtet sind.

In Fig. 11 wurde die Abdeckung 8 des Dübels 2 von der Befestigungsstange 1 bereits durchstoßen. Mit Hilfe einer hier nicht gezeigten Skala, welche vorzugsweise auf der flachen Seite 30 der Befestigungsstange 1 angebracht ist, kann nun der Abstand des zu befestigenden Objektes, hier definiert durch den Mittelpunkt 31 der Schelle 29, auf einen gewünschten Wert eingestellt werden. Um durch das Aufweiten des Dübels auf seiner gesamten Länge eine gute Verankerung der erfindungsgemäßen Vorrichtung in der Wand zu erreichen, ist zusätzlich eine hier ebenfalls nicht gezeigte Markierung auf der flachen Seite 30 der Befestigungsstange 1 angebracht, die eine Mindesteinschubtiefe der Stange 1 bezüglich des Dübels 2 angibt. Diese Mindesteinschubtiefe ist vorzugsweise so definiert, dass bei Erreichen der Markierung die Befestigungsstange 1 an der Abdeckung 8 des hinteren Dübelendes 20 anliegt.

Die konkrete Anwendung der Vorrichtung funktioniert wie folgt:
Der vorzugsweise bereits auf die Befestigungsstange 1 vormontiert aufgeschobene Dübel 2 wird unter Beachtung der Ausrichtung mittels des rautenförmigen Abschlussbundes 9 in die vorgesehene Bohrung eingebracht. Hierbei ist die Abdeckung 8 noch nicht durchstoßen, so dass die Einbringbewegung direkt mittels der Befestigungsstange 1 vorgenommen wird. Dabei verhindert die Abdeckung 8 in vorteilhafter Weise das Eindringen von Schmutzpartikeln in den Axialhohlraum 3 des Dübels 2. Sobald der Dübel 2 bündig in der Wand sitzt, kann die Abdeckung 8 durch einen kurzen Schlag auf das dem Dübel abgewandte Ende 28 der Befestigungsstange 1, oder im vorliegenden Fall auf die Schelle 29, durchstoßen werden. Danach wird mittels der Skala der gewünschte Abstand des zu verlegenden Rohres oder ähnlichem eingestellt und die Verklemmung mittels einer Vierteldrehung der Befestigungsstange 1 erreicht, wobei ausgenutzt werden kann, dass die Schelle 29 als exzentrischer Hebel ein stärkeres Drehmoment herbeiführt.

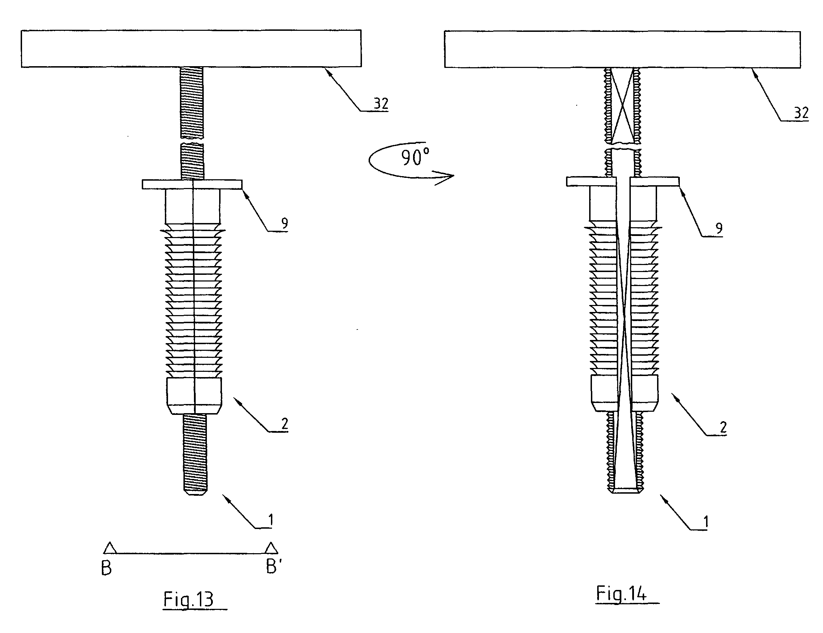

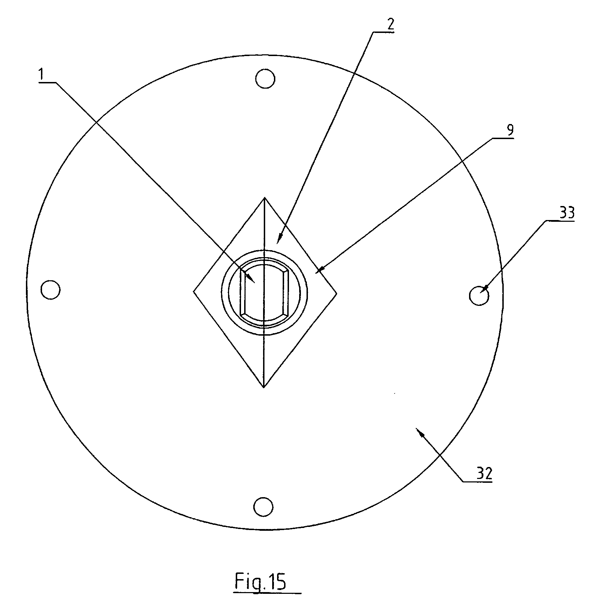

Ein weiteres Anwendungsbeispiel der bevorzugten Ausführungsart ist in den Figuren 13, 14 und 15 dargestellt. Hierbei handelt es sich um ein Abstandhaltersystem, wie es zum Beispiel für das Einziehen eines Zwischen- oder Doppelbodens benötigt wird. In diesem Fall weist das dem Dübel 2 gegenüberliegende Ende 28 der Befestigungsstange 1 eine vorzugsweise kreisförmige Platte 32 auf. Zum Schaffen einer Abstützung für horizontale Bodenplatten in einer gewünschten Höhe, werden nun mehrere aus Dübel 2 und mit Platte 32 ausgestattete Befestigungsstange 1 in dafür vorgesehene Bohrungen in bestehenden Boden eingebracht. Hierzu kann, wie oben erwähnt, in vorteilhafter Weise die Befestigungsstange 1 benutzt werden. Durch Durchstoßen der Abdeckung 8 und Einstellen des Abstandes, wie zuvor beschrieben, können die Platten 32 nun auf das selbe Niveau gebracht werden, um danach von hier nicht gezeigten Bodenplatten des Zwischenbodens abgedeckt zu werden, die mittels der Bohrungen 33 an den Platten 32 befestigt werden können. Wird für den Dübel 2 Kunststoff oder ein anderes schalldämmendes Material gewählt, so erreicht man den Vorteil einer sehr guten Trittschalldämmung des Doppelbodens.

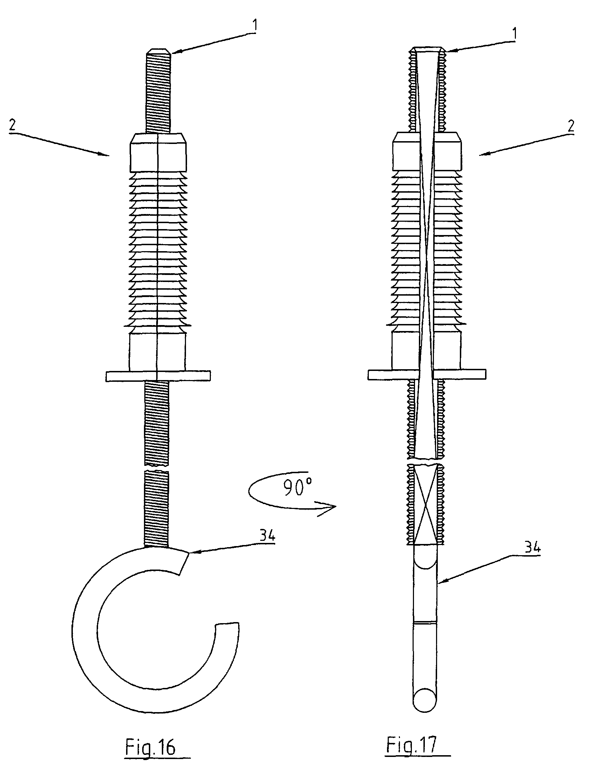

Weitere Anwendungsbeispiele werden in den Figuren 16 bis 21 gezeigt. Hierbei ist die Vorgehensweise zur Montage der erfindungsgemäßen Vorrichtung die gleiche wie zuvor beschrieben, jedoch ist das von dem Dübel 2 abgewandte Ende 28 der Befestigungsstange 1 je nach Anwendung unterschiedlich gestaltet.

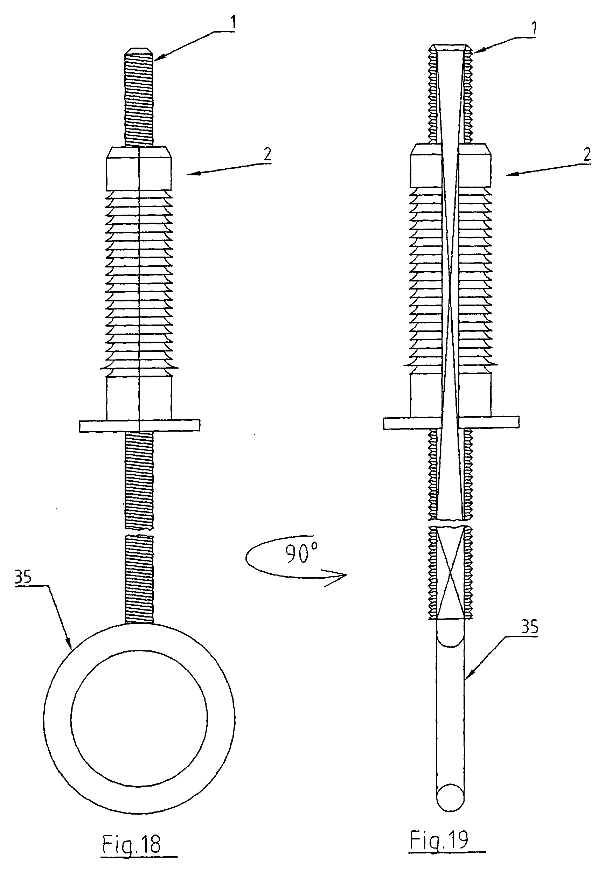

So weist die in der Fig. 16 und 17 dargestellte Anordnung einen Haken 34 zum Einhängen beliebiger, hier nicht gezeigter Gegenstände wie z. B. Lampen auf, während die Anordnung in den Fig. 18 und 19 eine Öse 35 am Ende der Befestigungsstange 1 besitzt.

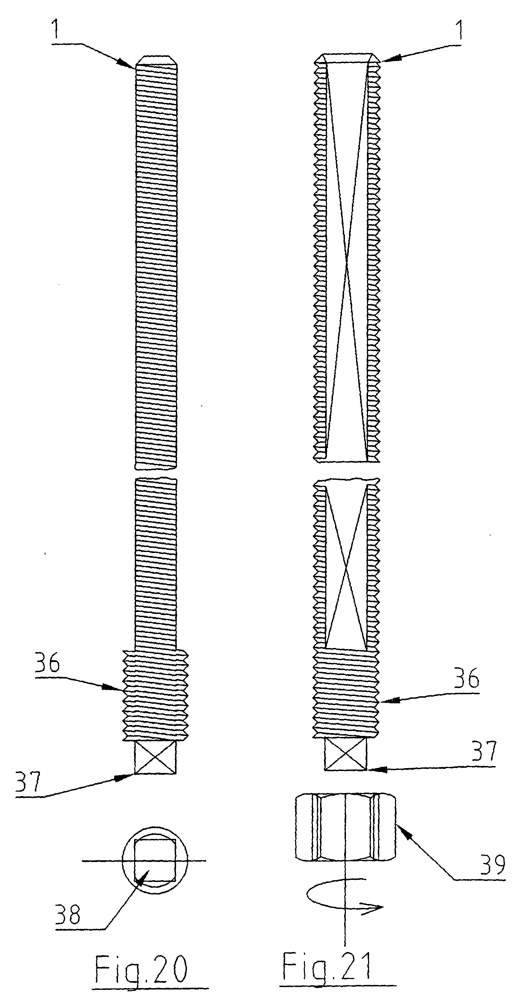

Die in den Fig. 20 und 21 gezeigte Befestigungsstange 1 ist nicht über ihre gesamte Länge abgefräst worden, sondern besitzt an dem, dem hier nicht gezeigten Dübel 2 gegenüberliegenden Ende zunächst einen Abschnitt 36, in welchem das Gewinde noch komplett ist, und als Abschluss einen Abschnitt 37, der einen quadratischen Querschnitt 38 bzw. einen Vierkant aufweist. Letzterer Abschnitt 37 kann benutzt werden, um die Befestigungsstange 1 erfindungsgemäß um 90° zu verdrehen, um eine Verklemmung zu bewirken. Mittels einer auf den Gewindeabschnitt 36 aufgedrehten Mutter 39 kann dann auf herkömmliche Art und Weise eine erwünschte Halterung, zum Beispiel eines Waschbeckens oder ähnlicher sanitärer Einrichtungen, erzeugt werden.

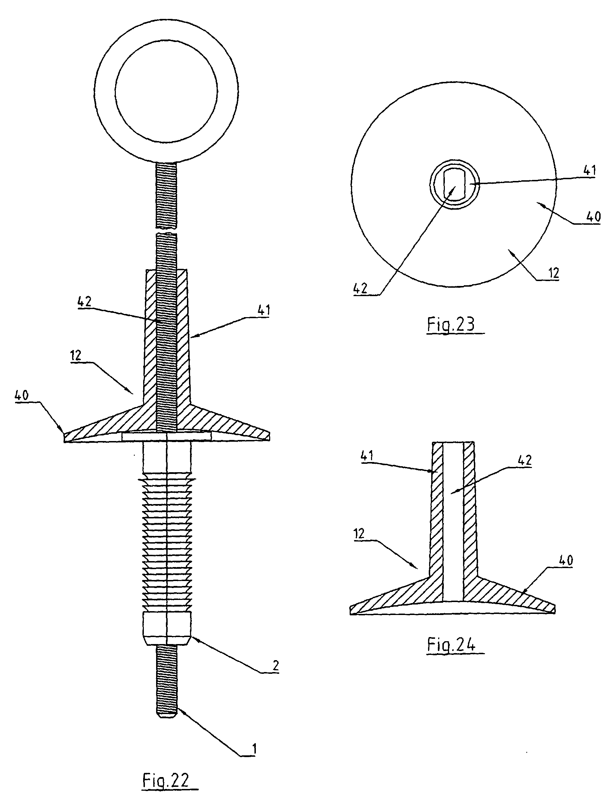

Die Figuren 22 bis 24 zeigen eine Anwendung der bevorzugten Ausführung für den Einsatz in einer Umgebung, in der ein Austreten von Verunreinigungen aus der Bohrung, in welcher die erfindungsgemäße Vorrichtung eingebracht wird, unerwünscht ist. Während üblicherweise die am unteren Ende des Dübels 2 befindliche Abdeckung 8 schon diesbezüglich wirkt, kann dies, speziell nach oben erwähntem Durchstoßen derselbigen, unter bestimmten Bedingungen, beispielsweise in Reinsträumen, nicht ausreichend sein.

In diesem Fall kann eine bereits auf der Befestigungsstange 1 vormontierte oder nachträglich aufgebrachte Abdeckkappe 12 benutzt werden. Diese besteht aus einem tellerförmigen Unterteil 40, welches sich bündig mit der Wandung über den Abschlussbund 9 des Dübels 2 legen lässt, und einen zylindrischen Schaft 41, der eine dem Querschnitt 23 der Befestigungsstange 1 nachgeformten Hohlraum 42 aufweist. Die Abdeckkappe 12 kann dann nach dem erfindungsgemäßen Verklemmen der Vorrichtung im bündigen Kontakt mit dem Abschlussbund 9 des Dübels 2 gebracht werden, wobei die hier nicht gezeigte Bohrung, welche den Dübel 2 aufgenommen hat, komplett von der Abdeckkappe 12 abgedeckt wird.

Im Fall der Benutzung eines beispielweise thermoplastischen Materials für die Abdeckkappe 12 kann durch Erhitzen derselbigen ein dichter Verschluss der Bohrung inklusive des Dübels 2 und eingebrachter Befestigungsstange 1 erreicht werden.

Als Materialien für den Dübel 2 kommen insbesondere Kunststoff, Messing, Aluminium, Kupfer, Stahl oder Blech in Frage.

### Bezugszeichenliste

- 1: Befestigungsstange
- 2: Befestigungselement
- 3: Axialhohlraum
- 4 u 5: Körperhälfte
- 6: Trennebene
- 7: Widerhakenmittel
- 8: Abdeckung
- 9: Abschlussbund
- 10: Haltering
- 11: Haltering
- 12: Abdeckkappe
- 13: Axialrichtung
- 14: Sollbruchstelle
- 15: Achse der Befestigungsstange
- 16: Achse des Befestigungselementes
- 17: Querschnitt des Axialhohlraums 3
- 18: Radialrichtung RD1 (breiterer Querschnitt)
- 19: Radialrichtung RD2 (schmalerer Querschnitt)
- 20: hinteres Ende des Befestigungselementes
- 21: Vorderseite des Befestigungselementes
- 22: lange Rautendiagonale
- 23: Querschnitt der Befestigungsstange
- 24: Radialrichtung RS1 (breiterer Querschnitt)
- 25: Radialrichtung RS2 (schmalerer Querschnitt)
- 26: Gewinde
- 27: Innenseite des Befestigungselementes
- 28: Ende der Befestigungsstange (dem Befestigungselement abgewandt)
- 29: Schelle
- 30: flache Seite der Befestigungsstange
- 31: Schellenmittelpunkt
- 32: Abstandhalterplatte
- 33: Bohrungen in Abstandhalterplatte
- 34: Haken
- 35: Öse
- 36: Gewindeabschnitt
- 37: quadratischer Querschnittsabschnitt
- 38: quadratischer Querschnitt
- 39: Mutter
- 40: Unterteil der Abdeckkappe
- 41: Schaft der Abdeckkappe
- 42: Hohlraum in Schaft 41

## Patentansprüche

1. Vorrichtung zum Haltern eines Gegenstandes an einem Objekt, insbesondere an einer Wand, umfassend
- eine Befestigungsstange (1), an deren einem Ende der Gegenstand halterbar ist, und
- ein Befestigungselement (2) zum Befestigen der Befestigungsstange (1) in einer in dem Objekt vorgesehenen Bohrung, welches einen länglichen Elementkörper mit einem in dessen Axialrichtung verlaufenden Axialhohlraum (3) zur Aufnahme der Befestigungsstange (1) aufweist, wobei der Elementkörper zum Verklemmen des Befestigungselements (2) in der Bohrung in Radialrichtung aufweitbar ist,
- wobei die Befestigungsstange (1) zumindest in wenigstens einem Abschnitt einen Querschnitt (23) aufweist, der in einer ersten Radialrichtung (RS1) breiter als in einer zweiten Radialrichtung (RS2) ist, so dass das Aufweiten des Elementkörpers mit weniger als einer vollen Umdrehung der Befestigungsstange (1) erfolgen kann
**dadurch gekennzeichnet, dass**
der Abschnitt der Befestigungsstange (1) eine axiale Länge aufweist, die größer als die axiale Länge des Befestigungselements (2) ist.

2. Vorrichtung nach Anspruch 1,
**dadurch gekennzeichnet, dass**
eine auf die Befestigungsstange (1) aufschiebbare Abdeckkappe (12) vorhanden ist, welche die Bohrung derart abdichtend abdeckt, dass aus ihr keine Verunreinigungen in die Umgebung gelangen können.

3. Befestigungsstange (1) zum Befestigen eines Gegenstandes an einem Objekt, insbesondere an einer Wandung, wobei der Gegenstand an einem Ende der Befestigungsstange (1) halterbar ist und das andere Ende der Befestigungsstange (1) in einem Befestigungselement (2) zum Zwecke ihrer Befestigung in einer in dem Objekt befindlichen Bohrung aufnehmbar ist, wobei das Befestigungselement (2) einen länglichen Elementkörper aufweist, der zum Verklemmen des Befestigungselements (2) in der Bohrung in Radialrichtung aufweitbar ist, und wobei die Befestigungsstange (1) zumindest in wenigstens einem Abschnitt einen Querschnitt (23) aufweist, der in einer ersten Radialrichtung (RS1) breiter als in einer zweiten Radialrichtung (RS2) ist, so dass das Aufweiten des Elementkörpers mit weniger als einer vollen Umdrehung der Befestigungsstange (1) erfolgen kann,
**dadurch gekennzeichnet, dass**
der Abschnitt der Befestigungsstange (1) eine axiale Länge aufweist, die größer als die axiale Länge des Befestigungselements (2) ist.

4. Vorrichtung oder Befestigungsstange nach einem der vorangehenden Ansprüche,
**dadurch gekennzeichnet, dass**
der Querschnitt der Befestigungsstange (1) Vierkantform aufweist.

5. Vorrichtung oder Befestigungsstange nach Anspruch 4,
**dadurch gekennzeichnet, dass**
die Ecken der Vierkantform abgeflacht oder abgerundet sind.

6. Vorrichtung oder Befestigungsstange nach Anspruch 4 oder 5,
**dadurch gekennzeichnet, dass**
die Vierkantform rechteckig ausgebildet ist.

7. Vorrichtung oder Befestigungsstange nach einem der Ansprüche 1 bis 3,
**dadurch gekennzeichnet, dass**
der Querschnitt der Befestigungsstange (1) Ellipsenform aufweist.

8. Vorrichtung oder Befestigungsstange nach einem der vorangehenden Ansprüche,
**dadurch gekennzeichnet, dass**
auf in der ersten Radialrichtung gegenüberliegenden Seiten des Querschnitts der Befestigungsstange (1) jeweils Widerhakenmittel (7) vorhanden sind, welche beim Aufweiten des Elementkörpers in dessen Material einschneiden.

9. Vorrichtung oder Befestigungsstange nach Anspruch 8,
**dadurch gekennzeichnet, dass**
die Widerhakenmittel von einem Gewinde (7) gebildet werden.

10. Vorrichtung oder Befestigungsstange nach einem der vorangehenden Ansprüche,
**dadurch gekennzeichnet, dass**
die Befestigungsstange (1) eine Markierung aufweist, welche ihre Mindesteinstecktiefe in das Befestigungselement (2) kennzeichnet.

11. Vorrichtung oder Befestigungsstange nach einem der vorangehenden Ansprüche,
**dadurch gekennzeichnet, dass**
die Befestigungsstange (1) eine Skala aufweist, an welcher der Abstand des zu halternden Gegenstandes von dem Objekt ablesbar ist.

12. Befestigungselement (2) zum Befestigen einer Befestigungsstange (1) in einer in einem Objekt vorgesehenen Bohrung, wobei an einem Ende der Befestigungsstange (1) ein Gegenstand halterbar ist, umfassend einen länglichen Elementkörper mit einem in dessen Axialrichtung verlaufenden Axialhohlraum (3) zur Aufnahme der Befestigungsstange (1), wobei der Elementkörper zum Verklemmen des Befestigungselements (2) in der Bohrung in Radialrichtung aufweitbar ist und der Axialhohlraum (3) über seine gesamte Länge einen Querschnitt (17) aufweist, der in einer ersten Radialrichtung (RD1) breiter als in einer zweiten Radialrichtung (RD2) ist, so dass der Elementkörper durch Drehen der Befestigungsstange (1) mit entsprechender Querschnittsgeometrie um weniger als eine volle Umdrehung aufgeweitet werden kann,
**dadurch gekennzeichnet, dass**
der Axialhohlraum (3) eine Länge aufweist, die kleiner als die axiale Länge der Befestigungsstange (1) ist.

13. Vorrichtung oder Befestigungselement nach einem der vorangehenden Ansprüche,
**dadurch gekennzeichnet, dass**
der Elementkörper aus zwei Körperhälften (4, 5) besteht, die von einer Trennebene (6) voneinander getrennt werden, so dass sie beim Aufweiten voneinander beabstandet werden.

14. Vorrichtung oder Befestigungselement nach Anspruch 13,
**dadurch gekennzeichnet, dass**
die Trennebene (6) als Sollbruchstelle ausgebildet ist, die beim Aufweiten bricht.

15. Vorrichtung oder Befestigungselement nach Anspruch 14,
**dadurch gekennzeichnet, dass**
die Sollbruchstelle als Perforierung ausgebildet ist.

16. Vorrichtung oder Befestigungselement nach Anspruch 14,
**dadurch gekennzeichnet, dass**
die Sollbruchstelle filmscharnierartig ausgebildet ist.

17. Vorrichtung oder Befestigungselement nach Anspruch 13,
**dadurch gekennzeichnet, dass**
die Körperhälften (4, 5) von wenigstens einem elastischen Haltering zusammengehalten werden.

18. Vorrichtung oder Befestigungselement nach einem der vorangehenden Ansprüche,
**dadurch gekennzeichnet, dass**
der Axialhohlraum (3) einen Querschnitt aufweist, der seiner Geometrie und Abmessung nach im wesentlichen dem Querschnitt der Befestigungsstange (1) entspricht, so dass die Befestigungsstange (1) im wesentlichen ohne Radialspiel in dem Axialhohlraum (3) aufgenommen werden kann.

19. Vorrichtung oder Befestigungselement nach einem der vorangehenden Ansprüche,
**dadurch gekennzeichnet, dass**
der Axialhohlraum (3) an dem dem zu halternden Gegenstand abgewandten Ende des Befestigungselements (2) mittels einer Abdeckung (8) verschlossen ist, die von der Befestigungsstange (1) durchstoßen werden kann.

20. Vorrichtung oder Befestigungselement nach einem der vorangehenden Ansprüche,
**dadurch gekennzeichnet, dass**
an dem dem zu halternden Gegenstand zugewandten Ende des Befestigungselements (2) ein Abschlußbund (9) angeordnet ist.

21. Vorrichtung oder Befestigungselement nach Anspruch 20,
**dadurch gekennzeichnet, dass**
der Abschlußbund (9) rautenförmig ausgebildet ist.

22. Vorrichtung oder Befestigungselement nach Anspruch 20 oder 21,
**dadurch gekennzeichnet, dass**
der Abschlußbund (9) Informationen über die Halterung des Gegenstandes an dem Objekt aufweist.

23. Vorrichtung oder Befestigungselement nach einem der vorangehenden Ansprüche,
**dadurch gekennzeichnet, dass**
am Außenumfang des Elementkörpers Haltemittel (10) angeordnet sind, die das Befestigungselement (2) widerhakenartig in der Bohrung halten.

24. Vorrichtung oder Befestigungselement nach Anspruch 23,
**dadurch gekennzeichnet, dass**
die Haltemittel von mehreren vollständig umlaufenden, scharfkantigen Halteringen (10) gebildet werden.

25. Vorrichtung oder Befestigungselement nach Anspruch 24,
**dadurch gekennzeichnet, dass**
wenigstens einer (11) der Halteringe einen im Verhältnis zu den übrigen Halteringen (10) größeren Durchmesser aufweist, um als Verdrehsicherung zwischen dem Befestigungselement (2) und der Bohrung zu wirken.

26. Verfahren zum Befestigen einer Vorrichtung zum Haltern eines Gegenstandes an einem Objekt in einer in dem Objekt vorgesehenen Bohrung, wobei die Vorrichtung zum Haltern eine Befestigungsstange (1), an deren einem Ende der Gegenstand halterbar ist, und ein Befestigungselement (2) zum Befestigen der Befestigungsstange (1) in der Bohrung, welches einen länglichen Elementkörper mit einem in dessen Axialrichtung verlaufenden Axialhohlraum (3) zur Aufnahme der Befestigungsstange (1) umfaßt, aufweist, umfassend die Schritte
- Einbringen des Befestigungselements (2) in die Bohrung,
- Einbringen der Befestigungsstange (1) in die Bohrung, und
- Verklemmen des Befestigungselements (2) in der Bohrung durch dessen radiales Aufweiten mit Hilfe der Befestigungsstange (1), wobei das Aufweiten des Befestigungselements (2) mit weniger als einer vollen Umdrehung der Befestigungsstange (1) erfolgt,
**dadurch gekennzeichnet, dass**
das Einbringen des Befestigungselements (2) in die Bohrung und das Einbringen der Befestigungsstange (1) in die Bohrung gleichzeitig erfolgen, wobei das Befestigungselement (2) an der Befestigungsstange (1) vormontiert ist.

27. Verfahren nach Anspruch 26,
**dadurch gekennzeichnet, dass**
vor dem Verklemmen des Befestigungselements (2) der Sollabstand des Gegenstandes von dem Objekt eingestellt wird.

28. Verfahren nach Anspruch 27,
**dadurch gekennzeichnet, dass**
vor dem Einstellen des Sollabstandes eine an dem dem zu halternden Gegenstand abgewandten Ende des Befestigungselements (2) vorhandene Abdeckung (8), die den Axialhohlraum (3) verschließt, mit der Befestigungsstange (1) durchstoßen wird

## Claims

1. Device for retaining an article on an object, in particular a wall, comprising
- a fixing rod (1), on one end of which the article can be retained and
- a fixing element (2) for securing the fixing rod (1) in a bore provided in the object, having an elongate element body with an axial cavity (3) extending in its axial direction for accommodating the fixing rod (1), which element body can be expanded in the radial direction in order to clamp the fixing element (2) in the bore,
- the fixing rod (1) having a cross-section (23) which is wider in a first radial direction (RS1) than in a second radial direction (RS2) in at least one section so that the element body can be expanded with less than a full turn of the fixing rod (1),
**characterised in that**
the section of the fixing rod (1) has an axial length which is longer than the axial length of the fixing element (2).

2. Device as claimed in claim 1,
**characterised in that**
a push-on cap (12) is provided on the fixing rod (1), which sealingly covers the bore, preventing any impurities from escaping from it into the ambient air.

3. Fixing rod (1) for securing an article to an object, in particular a wall, whereby the article can be retained at one end of the fixing rod (1) and the other end of the fixing rod (1) can be accommodated in a fixing element (2) in order to secure it in a bore disposed in the object, whereby the fixing element (2) has an elongate element body which can be expanded in the radial direction in order to clamp the fixing element (2) in the bore, which fixing rod (1) has a cross-section (23) which is wider in a first radial direction (RS1) than in a second radial direction (RS2) in at least one section so that the element body can be expanded with less than a full turn of the fixing rod (1),
**characterised in that**
the section of the fixing rod (1) has an axial length which is longer than the axial length of the fixing element (2).

4. Device or fixing rod as claimed in one of the preceding claims,
**characterised in that**
the cross-section of the fixing rod (1) is tetragonal in shape.

5. Device or fixing rod as claimed in claim 4,
**characterised in that**
the corners of the tetragonal shape are flattened or rounded.

6. Device or fixing rod as claimed in claim 4 or 5,
**characterised in that**
the tetragonal shape is rectangular.

7. Device or fixing rod as claimed in one of claims 1 to 3,
**characterised in that**
the cross-section of the fixing rod (1) is ellipsoid in shape.

8. Device or fixing rod as claimed in one of the preceding claims,
**characterised in that**
oppositely lying sides of the cross-section of the fixing rod (1) in the first radial direction each have counter-hooking means (7) which cut into the material of the element body as it expands.

9. Device or fixing rod as claimed in claim 8,
**characterised in that**
the counter-hooking means are provided in the form of a thread (7).

10. Device or fixing rod as claimed in one of the preceding claims, **characterised in that**
the fixing rod (1) has a marking which indicates its minimum insertion depth in the fixing element (2).

11. Device or fixing rod as claimed in one of the preceding claims, **characterised in that**
the fixing rod (1) has a scale indicating the distance between the article to be retained and the object.

12. Fixing element (2) for securing a fixing rod (1) in a bore provided in an object, whereby an article can be retained at one end of the fixing rod (1), comprising an elongate element body with an axial cavity (3) extending in its axial direction for accommodating the fixing rod (1), which element body is expandable in the radial direction in order to clamp the fixing element (2) in the bore and the axial cavity (3) has a cross-section (17) across its entire length which is wider in a first radial direction (RD1) than in a second radial direction (RD2) so that the element body can be expanded by turning the fixing rod (1), which has an appropriate cross-sectional geometry, by less than a full turn,
**characterised in that**
the axial cavity (3) has a length that is shorter than the axial length of the fixing rod (1).

13. Device or fixing element as claimed in one of the preceding claims, **characterised in that**
the element body consists of two body halves (4, 5), which are separated from one another by a dividing plane (6) so that they are spaced apart from one another on expansion.

14. Device or fixing element as claimed in claim 13,
**characterised in that**
the dividing plane (6) is a breaking point which breaks on expansion.

15. Device or fixing element as claimed in claim 14,
**characterised in that**
the breaking point is provided in the form of a perforation.

16. Device or fixing element as claimed in claim 14,
**characterised in that**
the breaking point is provided in the form of a type of integral hinge.

17. Device or fixing element as claimed in claim 13,
**characterised in that**
the body halves (4, 5) are held together by means of at least one elastic retaining ring.

18. Device or fixing element as claimed in one of the preceding claims,
**characterised in that**
the axial cavity (3) has a cross-section which essentially matches the cross-section of the fixing rod (1) in terms of its geometry and dimensions so that the fixing rod (1) can be accommodated in the axial cavity (3) with essentially no radial clearance.

19. Device or fixing element as claimed in one of the preceding claims,
**characterised in that**,
at the end of the fixing element (2) remote from that intended to retain the article, the axial cavity (3) is closed off by means of a cap (8) which can be pierced by the fixing rod (1).

20. Device or fixing element as claimed in one of the preceding claims,
**characterised in that**
a terminating collar (9) is disposed at the end of the fixing element (2) remote from that intended to retain the article.

21. Device or fixing element as claimed in claim 20,
**characterised in that**
the terminating collar (9) is of a diamond shape.

22. Device or fixing element as claimed in claim 20 or 21,
**characterised in that**
the terminating collar (9) incorporates information about how the article is retained on the object.

23. Device or fixing element as claimed in one of the preceding claims,
**characterised in that**
retaining means (10) are provided on the external periphery of the element body, which retain the fixing element (2) in a counter-hooking arrangement in the bore.

24. Device or fixing element as claimed in claim 23,
**characterised in that**
the retaining means are provided in the form of several sharp-edged retaining rings (10) extending continuously round the periphery.

25. Device or fixing element as claimed in claim 24,
**characterised in that**
at least one (11) of the retaining rings has a diameter that is bigger than the other retaining rings (10) in order to prevent the fixing element (2) from turning in the bore.

26. Method of securing a device for retaining an article on an object in a bore provided in the object, which device has a fixing rod (1) for retaining purposes, on one end of which the article can be retained, and, for securing the fixing rod (1) in the bore, a fixing element (2) having an elongate element body with an axial cavity (3) extending in its axial direction for accommodating the fixing rod (1), comprising the following steps
- the fixing element (2) is introduced into the bore,
- the fixing rod (1) is introduced into the bore and
- the fixing element (2) is clamped in the bore due to its radial expansion with the aid of the fixing rod (1), the fixing element (2) being expanded with less than a full turn of the fixing rod (1),
**characterised in that**
the fixing element (2) is introduced into the bore at the same time as the fixing rod (1) is introduced into the bore, the fixing element (2) and the fixing rod (1) being pre-assembled.

27. Method as claimed in claim 26,
**characterised in that**
the desired distance of the article from the object is set before clamping the fixing element (2).

28. Method as claimed in claim 27,
**characterised in that**
a cap (8) closing off the axial cavity (3) disposed on an end of the fixing element (2) remote from that intended to retain the article is pierced with the fixing rod (1) before setting the desired distance.

## Revendications

1. Dispositif pour supporter un article sur un objet, en particulier sur une paroi, comprenant :
- une barre de fixation (1) à une extrémité de laquelle l'article peut être supporté, et
- un élément de fixation (2) afin de fixer la barre de fixation (1) dans un perçage prévu dans l'objet, lequel présente un corps d'élément allongé avec un espace creux axial (3) s'étendant dans son sens axial afin de loger la barre de fixation (1), le corps d'élément pouvant s'élargir dans le sens radial dans le but de coincer l'élément de fixation (2) dans le perçage,
- la barre de fixation (1) présentant dans au moins une partie une coupe transversale (23) qui est plus large dans un premier sens radial (RS1) que dans un second sens radial (RS2), de sorte que l'élargissement du corps d'élément nécessite moins d'une rotation complète de la barre de fixation (1), **caractérisé en ce que** la partie de la barre de fixation (1) présente une longueur axiale plus grande que la longueur axiale de l'élément de fixation (2).

2. Dispositif selon la revendication 1, **caractérisé par** la présence d'un capuchon (12) pouvant coulisser sur la barre de fixation (1), lequel couvre hermétiquement le perçage, de telle sorte qu'aucune impureté provenant de celui-ci ne puisse être rejetée dans l'environnement.

3. Barre de fixation (1) destinée à fixer un article à un objet, en particulier à une paroi, l'article pouvant être supporté à une extrémité de la barre de fixation (1) et l'autre extrémité de la barre de fixation (1) pouvant être logée dans un élément de fixation (2) en vue de sa fixation dans un perçage se trouvant dans l'objet, l'élément de fixation (2) présentant un corps d'élément allongé qui peut s'élargir dans le sens radial afin de coincer l'élément de fixation (2) dans le perçage et la barre de fixation (1) présentant dans au moins une partie une coupe transversale (23) qui est plus large dans un premier sens radial (RS1) que dans un second sens radial (RS2), de sorte que l'élargissement du corps d'élément nécessite moins d'une rotation complète de la barre de fixation (1), **caractérisé en ce que** la partie de la barre de fixation (1) présente une longueur axiale plus grande que la longueur axiale de l'élément de fixation (2).

4. Dispositif ou barre de fixation selon l'une des revendications précédentes, **caractérisé en ce que** la coupe transversale de la barre de fixation (1) présente une forme à quatre pans.

5. Dispositif ou barre de fixation selon la revendication 4, **caractérisé en ce que** les bords de la forme à quatre pans sont aplatis ou arrondis.

6. Dispositif ou barre de fixation selon la revendication 4 ou 5, **caractérisé en ce que** la forme à quatre pans est conçue de manière rectangulaire.

7. Dispositif ou barre de fixation selon l'une des revendications 1 à 3, **caractérisé en ce que** la coupe transversale de la barre de fixation (1) présente une forme elliptique.

8. Dispositif ou barre de fixation selon l'une des revendications précédentes, **caractérisé en ce que**, sur les côtés opposés de la coupe transversale de la barre de fixation (1) dans le premier sens radial, des dentures (7) sont respectivement présentes, lesquelles incisent la matière du corps d'élément lors de son élargissement.

9. Dispositif ou barre de fixation selon la revendication 8, **caractérisé en ce que** les dentures se présentent sous la forme d'un filetage (7).

10. Dispositif ou barre de fixation selon l'une des revendications précédentes, **caractérisé en ce que** la barre de fixation (1) présente une marque, laquelle indique sa profondeur d'emboîtement minimale dans l'élément de fixation (2).

11. Dispositif ou barre de fixation selon l'une des revendications précédentes, **caractérisé en ce que** la barre de fixation (1) présente une graduation sur laquelle on peut lire la distance entre l'article à supporter et l'objet.

12. Elément de fixation (2) destiné à fixer une barre de fixation (1) dans un perçage prévu dans un objet, un article pouvant être supporté à une extrémité de la barre de fixation (1), comprenant un corps d'élément allongé avec un espace creux axial (3) s'étendant dans son sens axial pour loger la barre de fixation (1), le corps d'élément pouvant s'élargir dans le sens radial afin de coincer l'élément de fixation (2) dans le perçage et l'espace creux axial (3) présentant une coupe transversale (17) sur la totalité de sa longueur qui est plus large dans un premier sens radial (RD1) que dans un second sens radial (RD2), de sorte que le corps d'élément puisse être élargi grâce à moins d'une rotation complète de la barre de fixation (1) avec une géométrie de la coupe transversale appropriée, **caractérisé en ce que** l'espace creux axial (3) présente une longueur plus petite que la longueur axiale de la barre de fixation (1).

13. Dispositif ou élément de fixation selon l'une des revendications précédentes, **caractérisé en ce que** le corps d'élément se compose de deux moitiés de corps (4, 5), séparées l'une de l'autre par un plan de séparation (6), de sorte qu'elles soient espacées l'une de l'autre lors de l'élargissement.

14. Dispositif ou élément de fixation selon la revendication 13, **caractérisé en ce que** le plan de séparation (6) est conçu comme une ligne destinée à la rupture qui se rompt lors de l'élargissement.

15. Dispositif ou élément de fixation selon la revendication 14, **caractérisé en ce que** la ligne destinée à la rupture est conçue comme une perforation.

16. Dispositif ou élément de fixation selon la revendication 14, **caractérisé en ce que** la ligne destinée à la rupture est conçue à la manière d'une charnière souple.

17. Dispositif ou élément de fixation selon la revendication 13, **caractérisé en ce que** les moitiés de corps (4, 5) sont maintenues ensemble par au moins un anneau de maintien élastique.

18. Dispositif ou élément de fixation selon l'une des revendications précédentes, **caractérisé en ce que** l'espace creux axial (3) présente une coupe transversale qui correspond, de part sa géométrie et ses dimensions, sensiblement à la coupe transversale de la barre de fixation (1), de sorte que la barre de fixation (1) puisse être logée sensiblement dans l'espace creux axial (3) sans jeu radial.

19. Dispositif ou élément de fixation selon l'une des revendications précédentes, **caractérisé en ce que** l'espace creux axial (3) est obturé sur l'extrémité de l'élément de fixation (2) opposée à l'article à supporter au moyen d'un capuchon (8) qui peut être percé par la barre de fixation (1).

20. Dispositif ou élément de fixation selon l'une des revendications précédentes, **caractérisé en ce qu'**une bordure (9) est placée sur l'extrémité de l'élément de fixation (2) du côté de l'article à supporter.

21. Dispositif ou élément de fixation selon la revendication 20, **caractérisé en ce que** la bordure (9) est conçue en losange.

22. Dispositif ou élément de fixation selon la revendication 20 ou 21, **caractérisé en ce que** la bordure (9) présente des informations concernant la fixation de l'article à l'objet.

23. Dispositif ou élément de fixation selon l'une des revendications précédentes, **caractérisé en ce que** des moyens de fixation (10) à la manière de dentures sont placés sur la périphérie extérieure du corps d'élément, qui fixent l'élément de fixation (2) dans le perçage.

24. Dispositif ou élément de fixation selon la revendication 23, **caractérisé en ce que** les moyens de fixation sont formés de plusieurs anneaux de maintien à angles vifs (10) l'entourant entièrement.

25. Dispositif ou élément de fixation selon la revendication 24, **caractérisé en ce qu'**au moins un des anneaux de maintien (11) présente un diamètre plus grand par rapport aux autres anneaux de maintien (10) afin d'assurer une sécurité contre la torsion entre l'élément de fixation (2) et le perçage.

26. Procédé pour fixer un dispositif destiné à supporter un article sur un objet dans un perçage prévu dans l'objet, le dispositif destiné à supporter comprenant une barre de fixation (1) à une extrémité de laquelle l'article peut être supporté, et un élément de fixation (2) afin de fixer la barre de fixation (1) dans le perçage, lequel présente un corps d'élément allongé avec un espace creux axial (3) s'étendant dans son sens axial afin de loger la barre de fixation (1), comprenant les étapes consistant à :
- introduire l'élément de fixation (2) dans le perçage,
- introduire la barre de fixation (1) dans le perçage, et
- coincer l'élément de fixation (2) dans le perçage grâce à son élargissement radial à l'aide de la barre de fixation (1), l'élargissement de l'élément de fixation (2) nécessitant moins d'une rotation complète de la barre de fixation (1), **caractérisé en ce que** l'introduction de l'élément de fixation (2) dans le perçage et l'introduction de la barre de fixation (1) dans le perçage ont lieu simultanément, l'élément de fixation (2) étant préassemblé sur la barre de fixation (1).

27. Procédé selon la revendication 26, **caractérisé en ce que** la distance prescrite entre l'article et l'objet est définie avant de coincer l'élément de fixation (2).

28. Procédé selon la revendication 27, **caractérisé en ce qu'**un capuchon (8) présent sur l'une des extrémités de l'élément de fixation (2) opposée à l'article à supporter, qui obture l'espace creux axial (3), est percé par la barre de fixation (1) avant de définir la distance prescrite.
